# EUROPÄISCHE PATENTANMELDUNG

(11) **EP 1 136 290 A1**
(43) Veröffentlichungstag der Anmeldung: **26.09.2001**
(21) Anmeldenummer: 99971377.9
(22) Anmeldetag: 19.10.1999
(51) Int. Cl.: B60J 3/00

(54) **SONNENSCHUTZVORRICHTUNG FÜR FAHRZEUGSCHEIBE**

(30) Priorität: 03.11.1998 RU 98120414; 21.01.1999 RU 99101786
(71) Anmelder: Zubkov, Alexandr Stepanovich, St. Petersburg 198205 (RU)
(72) Erfinder: Zubkov, Alexandr Stepanovich, St. Petersburg 198205 (RU)
(74) Vertreter: Walter, Wolf-Jürgen
(86) Internationale Anmeldenummer: RU9900391
(87) Internationale Veröffentlichungsnummer: WO0026049

(57) **Zusammenfassung**

Die Erfindung betrifft eine Lichtschutzvorrichtung, die die Kabine eines Kfz sowie die dort befindlichen Instrumente vor Überhitzung durch Sonnenstrahlen beim Parken schützt. Erfindungsgemäß besteht die Lichtschutzvorrichtung für eine Kraftfahrzeug-Frontscheibe aus einer Faltbahn und sägezahnförmigen Falten, wobei die Falten senkrecht zur Ober- und Unterkante der Bahn angeordnet sind, und mit Befestigungselementen der Bahn an der Innenseite der Frontscheibe in Form von Saugelementen mit Ansätzen an der Rückseite der Saugelemente, wobei an den oberen Ecken der Bahn Öffnungen angeordnet sind zur Wechselwirkung mit den Ansätzen der Saugelemente in Form von Haken, und wobei sich die Unterkante der Bahn in ihrem Betriebszustand in der Nähe der Frontscheibe auf dem Instrumentenbrett befindet und dieses berühren kann.

## Beschreibung

Die Erfindung gehört zur Hilfsausrüstung eines Kraftfahrzeuges (Kfz) und zwar zu den Lichtschutzvorrichtungen, die die Kabine eines Kfz sowie die dort befindlichen Instrumente vor überhitzung durch Sonnenstrahlen beim Parken schützen.

### Bekannter Stand der Technik

Bekannt sind Vorrichtungen zum Schutz des Kfz-Fensters vor Sonnenstrahlen in Form einer Jalousie, die sich im Betriebszustand vor der Scheibe befindet und im Außerbetriebszustand von ihr weggezogen ist (DE 3413966 B2). Die Bewegung der Jalousie erfolgt durch einen Antrieb.

Jedoch haben solche Vorrichtungen eine recht komplizierte Konstruktion. Außerdem befindet sich die Jalousie in senkrechter Lage, während die Kfz-Frontscheibe mehr oder weniger schräg ist. Infolgedessen schützt die Jalousie einen Teil des Instrumentenbrettes nicht vor Sonnenstrahlen.

Bekannt sind Vorrichtungen zum Schutz der Kfz-Kabine vor Sonnenstrahlen einer Jalousie am Rahmen der Fensteröffnung im Kfz. Die Lamellen der Jalousie sind gelenkig befestigt, fest miteinander und kinematisch mit dem Fahrersitz (SU, A1, 1606358) verbunden.

Diese Vorrichtungen sind konstruktiv kompliziert und, was sie Hauptsache ist, nicht zuverlässig wegen des Verklemmens der Gelenkstangen oder der Drehlamellen der Jalousie. Die Konstruktion ist stationär, ihre Montage und Demontage nimmt viel Zeit in Anspruch und bedarf spezieller Werkzeuge. Dabei ist der laufende Betrieb der Vorrichtung ziemlich gefährlich, da wegen einer plötzlichen Bedeckung des Sichtfeldes eine Havariesituation entstehen kann. Außerdem haben diese Vorrichtungen eine Funktion, und die Nutzung der Jalousielamellen z.B. als Informationsträger ist schwierig.

Bekannt sind Vorrichtungen zum Schutz der Kfz-Kabine vor Sonnenstrahlen mit verglasten Fenstertafeln, die sich in den Wänden der Kabine außerhalb des Kfz befinden. Die Fenstertafeln bestehen aus zwei Scheiben aus nicht gehärtetem Silikatglas und einer dazwischenliegenden Sonnenschutzschicht aus Metall in Form einer gelochten dunklen Folie. Die verglasten Fenstertafeln können an den Gelenken im Tafelunterteil ausgeschwenkt werden (RU-C-2022817).

Solche Vorrichtungen haben eine komplizierte Konstruktion und sind teuer. Außerdem verschlechtern diese Vorrichtungen das Sichtfeld des Fahrers wesentlich und können nicht als Informationsträger verwendet werden.

Bekannt sind auch Lichtschutzvorrichtungen für die Kfz-Fenster mit einer Bahn und Befestigungselementen, die an der Fensterinnenseite arretiert werden können. Die Horizontaloberkante der Bahn ist mit der Kfz-Karosse und die Unterkante - mit dem Querbalken in Form eines Federungselements mit einem runden Querschnitt und Verjüngungen an seinen Enden verbunden. Der Querbalken kann sich an den Führungen in Form von Federungselementen bewegen, die mindestens mit ihren unteren Enden in den Stützen parallel zur Scheibe an den Kfz-Fensterseiten aufgestellt sind, wobei die Länge der Führungen den Abstand zwischen ihren oberen Enden und den Stützen überschreitet und die Stützen an ihren unteren Oberflächen einen Reibbelag zur Wechselwirkung mit den Elementen der Kfz-Kabine unter dem Fenster aufweisen. Die Länge des Querbalkens überschreitet den Abstand zwischen den Führungen. Die Vorrichtung hat auch Elemente zur Höhenarretierung der Bahn, wobei sich die Elemente ihrer Arretierung in der geöffneten Endlage in den Stützen der Führungen befinden und als Labyrinthaussparungen auftreten, die an der Seite des Querbalkens offen sind, damit die Enden der Letzteren sich dort bewegen und arretiert werden können. Die Elemente der Arretierung der gerollten Bahn sind insbesondere in Form von Textilverschlüssen oder Knöpfen ausgeführt, die sich an beiden Seiten im Oberteil der Bahn ihren Seitenkanten entlang (SU-A-1754493) befinden.

Diese sowie alle oben beschriebenen Vorrichtungen sind konstruktiv und kinematisch kompliziert, enthalten zahlreiche Elemente, die sich gegenseitig bewegen; und dadurch werden sie teuer. Außerdem wird die Bewegung der Elemente in den Führungen insbesondere des Querbalkens unvermeidlich Schiefstellung und Verklemmen des Letzteren hervorrufen. Diese Erscheinung verstärkt sich wegen der Vibrationen beim Fahren des Kfz, die die Einstellung des Mechanismus und den Zustand der Befestigungselemente usw. beeinflussen. Die Vorrichtung ist praktisch stationär, da ihre Montage und Demontage ausreichend schwer sind und eine gewisse Zeit in Anspruch nehmen sowie Werkzeuge und bestimmter Fertigkeiten bedürfen. Dies setzt eigentlich die Notwendigkeit ihrer Nutzung beim Fahren eines Kfz in allen Witterungsverhältnissen voraus, wobei eine gewisse Verschlechterung des Sichtfeldes eintreten kann. Bei der Verwendung der Bahn als Träger von Werbung und Informationen zur Wahrnehmung ihres Wortlauts muß die Bahn (der Werbeträger) vollständig geöffnet werden. Anderenfalls wird ein Teil der Mitteilung, der möglicherweise die wichtigsten Informationen für den Verbraucher über seinen Vorteil oder ein anderes für ihn günstiges Effekt enthält, nicht sichtbar und für die Wahrnehmung zugänglich sein.

Bekannt sind auch Lichtschutzvorrichtungen für die Kfz-Frontscheibe mit einer Faltbahn mit sägeförmigen Rillen, deren bildende Elemente zur Ober- und Unterkante der Bahn senkrecht sind, und die Befestigungselemente der Bahn an der Innenseite der Frontscheibe in Form von Saugelementen mit Ansätzen an der Rückseite der Saugelemente (US-A-4647102). An den Bahnkanten sind Leisten befestigt: rechts eine feste und links eine Spannleiste. Die Saugelemente sind an der festen Leiste durch Elemente befestigt, die an der Leiste entlang gleiten können und an ihr mit Schrauben arretiert werden. Die Saugelemente gibt es nur an einer Seite - rechts, es müssen mindestens zwei, jedoch besser drei und mehr Saugelemente geben. Links erfolgt die Befestigung der Bahn durch die Spannleiste, die lang genug ist, damit, wenn die Spannleiste sich an der Frontscheibe und zwischen der Umrandung der Frontscheibe befindet, die Leiste eine ausreichende Spannung aufweisen kann, um die Lichtschutzvorrichtung im ab- oder eingewickelten Zustand zu vergrößern. Damit die Bahn nicht durchhängt, wird ein Mechanismus mit flexiblen Stangen verwendet.

Jedoch weisen solche Vorrichtungen eine Reihe von Mängeln auf. Vor allem sind sie konstruktiv kompliziert; es gibt außer der Bahn und der Saugelemente zwei verschiedene Leisten mit verschiedenen Funktionen, spezielle Elemente zur Verbindung und Einstellung der Saugelemente mit der Leiste sowie ein Mechanismus mit flexiblen Stangen.

Wenn man die Vorrichtung von der Scheibe demontieren und sie dann wieder montieren muß, muß man die Saugelemente abtrennen und sie dann wieder an der Scheibe befestigen. Bekanntlich verlieren die Gummisaugelemente bei ihrer mehrmaligen Verwendung sehr schnell ihre Fähigkeit, an der Oberfläche zu haften.

Wenn die Vorrichtung beim Fahren nicht demontiert wird, so verschlechtert sie erstens das Sichtfeld für den Beifahrer, wobei die Reibbefestigung der Spannleiste unzuverlässig ist, die linke Seite der Vorrichtung wird unvermeidlich abgelöst, was nicht nur das Sichtfeld verschlechtern sondern auch eine Havariesituation hervorrufen kann. Die Arretierung der Spannleiste dadurch, daß sie zwischen der Ober- und Unterseite der Umrandung der Frontscheibe (des Gummistranges) eingesteckt wird, ist sehr unzuverlässig, da es schwerfallen würde, den erforderlichen Grad der Ankopplung ihrer Enden mit dem Strang zu erreichen. Um die Enden der Leiste an den Strang ausreichend andrücken zu können, muß sie zusammengedrückt und ausgeknickt werden. Erforderlich ist eine recht genaue Übereinstimmung der Länge der Spannleiste mit der Frontscheibe, was eine streng individuelle Herstellung der Vorrichtung in Anwendung an bestimmte Kfz-Typen notwendig macht. Da die Leiste außerdem gebogen sein muß, wird auch die Bahn deformiert, d.h. ihre linke Kante wird gebogen sein, was die Sonnenschutzeigenschaften der Vorrichtung reduziert; der Gummistrang wird beim laufenden Kontakt mit den Kantenenden der Spannleiste beschädigt.

### Beschreibung der Erfindung

Aufgabe der Erfindung ist die Schaffung einer einfachen, preiswerten und zuverlässigen Lichtschutzvorrichtung für die Kfz-Frontscheibe, die die Kfz-Kabine und die dort befindlichen Ausrüstungen vor Sonnenstrahlen beim Parken ausreichend effektiv schützen sowie als Informationsträger zur Information von Werbekunden dienen kann. Dabei muß die Vorrichtung äußerst preiswert, einfach und betriebssicher sein, d.h. schnell, ohne jegliche Werkzeuge und Fertigkeiten bei der Ausführung von Montagearbeiten montiert und demontiert werden können, und die Vorrichtung muß nach ihrer Demontage kompakt sein.

Erfindungsgemäß wird diese Aufgabe wie folgt gelöst. Die Lichtschutzvorrichtung für die Kfz-Frontscheibe enthält eine Faltbahn mit sägezahnförmigen Falten, wobei die Falten senkrecht zur Ober- und Unterkante der Bahn angeordnet sind, Befestigungselemente der Bahn an der Innenseite der Frontscheibe in Form von Saugelementen mit Ansätzen auf. der Rückseite der Saugelemente, wobei sich an den oberen Ecken der Bahn öffnungen zur Wechselwirkung mit den Ansätzen der Saugelemente in Form von Haken befinden, und sich die Unterkante der Bahn im Betriebszustand in der Nähe der Frontscheibe auf dem Instrumentenbrett befindet mit der Möglichkeit des Kontakts mit diesem. Zumindest eine Oberfläche der Bahn kann Informationen aufweisen.

Der Anmelder hat keinerlei Informationsquellen festgestellt, die Angaben über die der beantragten ähnlichen technischen Lösungen enthalten, so daß die Erfindung neu ist.

Durch die Realisierung der Merkmale der Erfindung werden wichtige neue Objekteigenschaften erreicht. In der angebotenen technischen Lösung wird eine sichere Arretierung der Bahn durch zwei (und nicht mehr) symmetrische an der Frontscheibe angebrachten Befestigungselemente sowie dadurch erreicht, daß sich die Unterkante der Bahn im Betriebszustand in der Nähe der Frontscheibe befindet und das Instrumentenbrett berührt; dies schließt das Durchhängen der Bahn aus. Für ihre Arretierung an der Scheibe sind zwei Punkte ausreichend.

Die Konstruktion der Vorrichtung ist sehr einfach und kompakt, wobei sie von der Frontscheibe leicht abmontiert und dann wieder montiert werden, da die Saugelemente nicht an allen Teilen der Vorrichtung befestigt sind. Die kleine Größe behindert das Sichtfeld praktisch nicht, da es nicht erforderlich ist, die Saugelemente jedesmal abzunehmen und wieder zu befestigen. Die Lebensdauer der Saugelemente sowie die sichere Arretierung an der Scheibe werden größer. Beim Fahren ist die Vorrichtung abmontiert, deshalb ist eine selbständige Abwicklung der Faltbahn ausgeschlossen. Trotz der einfachen Konstruktion und des niedrigen Preises ist die Vorrichtung ausreichend zuverlässig und gewährleistet nicht nur einen effektiven Schutz der Kfz-Kabine und der dort befindlichen Ausrüstungen vor überhitzung beim Parken, sondern sie kann auch als Informationsträger zur Information von Werbungskonsumenten verwendet werden. Zu ihrer Montage und Einstellung werden keine Werkzeuge, auch kein Schraubendreher benötigt. Diese Handgriffe nehmen nur einige Sekunden in Anspruch, und es werden keine speziellen Fertigkeiten für Montage und Einstellung von Mechanismen benötigt. Die demontierte Vorrichtung wird zusammengelegt und nimmt eine kompakte Form ein, d.h. sie stellt im zusammengelegten Zustand einen schmalen Streifen mit einer kleinen Dicke dar und nimmt praktisch keinen Platz ein. Die Informationen auf der Bahn können wahrgenommen werden, wenn der Schirm an der Kfz-Frontscheibe befestigt ist, sowie bei seiner Entfaltung und Betrachtung ohne die Aufstellung im Fahrzeug.

### Kurze Beschreibung der Zeichnungen

Im nachfolgenden wird die Erfindung durch eine ausführliche Beschreibung ihrer Verwendung mit Hinweisen auf beigefügte Zeichnungen erläutert, auf denen folgendes abgebildet ist:

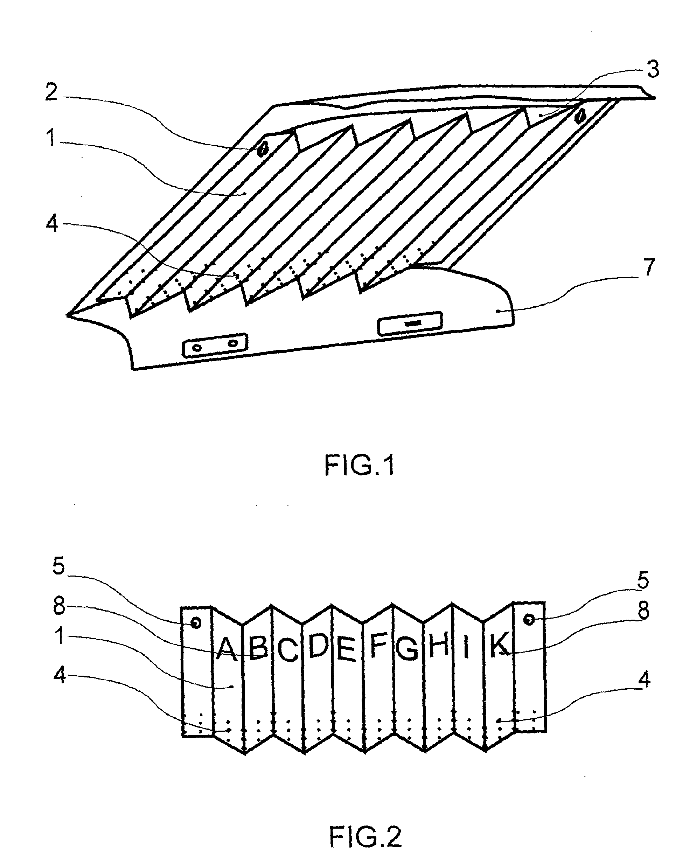

FIG.1 - Ansicht der Lichtschutzvorrichtung von der Kfz-Kabine aus;
FIG.2 - nach Außen gerichtete Seite der entfalteten Bahn mit Informationen;

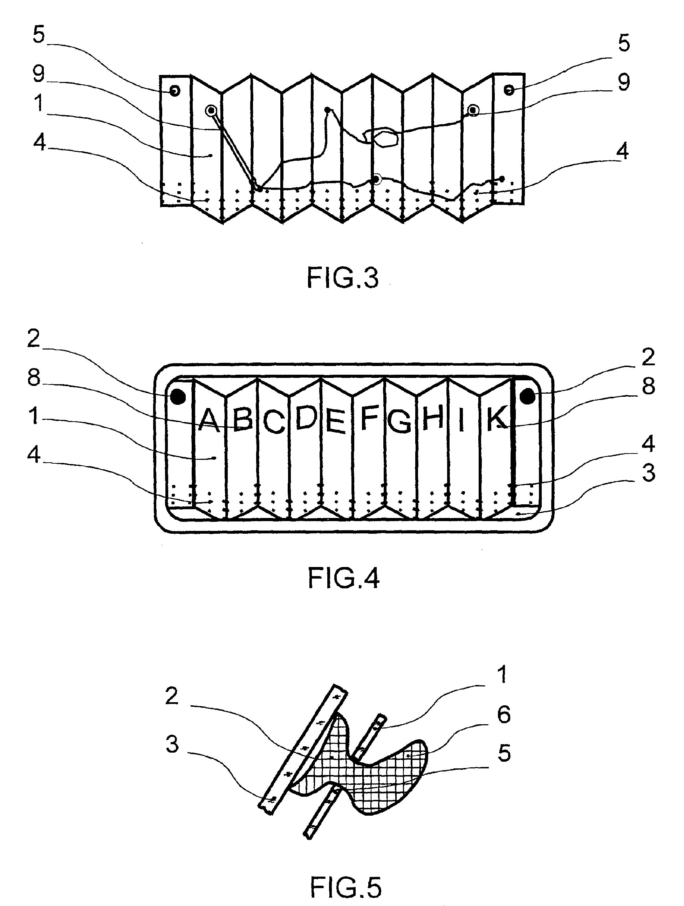

FIG.3 - wie FIG.2, aber zur Kfz-Kabine gerichtet;
FIG.4 - Lichtschutzvorrichtung mit Informationen auf der Bahn in der Kfz-Kabine, Ansicht der Frontscheibe des Fahrzeugs von seiner Außenseite;
FIG.5 - Befestigungselemente im Querschnitt.

### Die beste Verwendungsvariante der Erfindung

Die Lichtschutzvorrichtung für die Kfz-Frontscheibe enthält die Bahn 1 und Befestigungselemente in Form von Saugelementen 2, die an der Innenseite der Frontscheibe 3 befestigt werden. Die Bahn 1 ist gefaltet mit sägezahnförmigen Falten aus einem flexiblen Material, z.B. Papier, Pappe, Kunststoff oder speziellem getränktem Stoff. In einem konkreten Beispiel ist die Bahn 1 aus einer 0,4 mm-starken Pappe gefertigt. Die Falten sind senkrecht zur Ober- und Unterkante der Bahn 1 angeordnet.

Die Bahn 1 kann bis zu einer Größe ausgedehnt werden, die der Breite der Frontscheibe 3 entspricht. Auf die Oberfläche der Bahn 1 können in ihrem Unterteil mehrere Strichlinien angebracht werden, die parallel zu ihrer Unterkante verlaufen und nach deren Verlauf die Bahn abgeschnitten und dadurch ihre Höhe (auf der Zeichnung nicht dargestellt) verkürzt werden kann. Dabei können die Linien graphisch dargestellt oder eingeprägt werden.

Die Abstände zwischen der Schnittlinie und der Oberkante der Bahn 1 entsprechen den Höhen der Frontscheiben verschiedener Fahrzeugmarken. Dadurch kann ein und dieselbe Lichtschutzvorrichtung in Fahrzeugen verschiedener Marken verwendet werden. Außerdem kann die Faltbahn 1, wie dies an dem konkreten Beispiel gezeigt wurde, im Unterteil mit einer Lochung 4 entsprechend den Linien parallel zu ihrer Unterkante versehen werden. Der überflüssige Teil der Bahn 1 kann nach der Lochung 4 abgetrennt und die Höhe der Bahn der Lichtschutzvorrichtung ohne Schneidwerkzeug an eine bestimmte Kfz-Marke genau angepaßt werden.

An den oberen Ecken der Bahn 1 sind runde öffnungen 5 angeordnet. Die Saugelemente 2 haben an der Rückseite im Mittelteil Ansätze in Form von Haken 6. Dies gewährleistet die Halterung der Bahn 1 an den Saugelementen 2. Die Bereiche an den öffnungen 5, wo infolge eines längeren Betriebs Risse entstehen können, können als verstärkung mit Polymerfilm bedeckt oder laminiert werden.

Die Horizontalunterkante der Bahn 1 berührt im Betriebszustand das Instrumentenbrett 7 in der Nähe der Frontscheibe 3. An der Außenoberfläche der Bahn (des Schirms) 1 zur Frontscheibe 3 des Fahrzeuges befinden sich im konkreten Beispiel Werbeinformationen 8. An der Innenseite der Bahn 1 zur Kfz-Kabine können sich auch Informationen befinden; im konkreten Fall ist es eine Landkarte 9 mit Sehenswürdigkeiten.

Die Lichtschutzvorrichtung kann im zusammengelegten kompakten Zustand z.B. im Tür- oder Sitzfach des Fahrzeuges aufbewahrt werden. Die Saugelemente 2 sind an der Innenseite der Frontscheibe 3 an ihren oberen Ecken befestigt. Beim Parken wird bei starkem Sonnenlicht die Lichtschutzvorrichtung genommen und die Bahn 1 um die Breite der Frontscheibe 3 entfaltet. Die Haken 6 der Saugelemente 2 werden in die öffnungen 5 der Bahn 1 geführt, die untere horizontale Faltkante der Bahn 1 wird auf dem Instrumentenbrett 7 in der Nähe der Frontscheibe 3 aufgestellt, wodurch nicht nur die Kfz-Kabine sondern auch die Geräte auf dem Instrumentenbrett 7 vor überhitzung geschützt werden können.

Die Vorrichtung wird wie folgt demontiert: die Bahn 1 wird von den Haken 6 der Saugelemente 2 abgenommen. Die abgenommene Bahn 1 wird entsprechend den Falten zusammengelegt, wodurch sie eine kompakte Form eines schmalen Streifens mit einer kleinen Dicke einnimmt. Damit nimmt sie praktisch keinen Platz bei der Aufbewahrung und dem Transport im Fahrzeug ein. Die Saugelemente 2 mit den Haken 6 können von der Frontscheibe 3 abgenommen oder an dieser befestigt gelassen werden, da sie klein sind, sich in den oberen Ecken der Scheibe 3 befinden und deshalb das Sichtfeld praktisch nicht bedecken.

Die Informationen 8 und 9 auf der Oberfläche der Bahn 1 können von Fahrern und Fahrgästen wahrgenommen werden, wenn die Bahn 1 als Schirm an der Frontscheibe 3 des Fahrzeuges befestigt ist, sowohl bei seiner Entfaltung als auch bei der Betrachtung ohne die Montage. Außerdem werden die Informationen 8 an der Außenseite der Bahn 1 von vielen anderen Menschen bei der Befestigung des Schirms an der Frontscheibe des Fahrzeuges wahrgenommen.

### Industrielle Anwendungsmöglichkeit

Die Vorrichtung ist sehr preiswert im industriellen Verfahren und besteht aus den einfachsten bekannten Materialien: dichtem Papier, Pappe, Kunststoff oder speziell getränktem Stoff. Unter Anwendung bekannter Fertigungsverfahren und technischer Mittel (z.B. Faltmesservorrichtung) gefertigt kann sie in Kfz-Servicestationen, Zeitungs- und anderen Kiosken, auf der Fahrtroute, in Reisebüros usw. als kostenlose Anlage an andere Waren und Dienstleistungen verbreitet sowie verkauft werden.

## Patentansprüche

1. Lichtschutzvorrichtung für eine Kraftfahrzeug-Frontscheibe mit einer Faltbahn und sägezahnförmigen Falten, wobei die Falten senkrecht zur Ober- und Unterkante der Bahn angeordnet sind, und mit Befestigungselementen der Bahn an der Innenseite der Frontscheibe in Form von Saugelementen mit Ansätzen an der Rückseite der Saugelemente, **dadurch gekennzeichnet, daß** an den oberen Ecken der Bahn Öffnungen angeordnet sind zur Wechselwirkung mit den Ansätzen der Saugelemente in Form von Haken, und daß sich die Unterkante der Bahn in ihrem Betriebszustand in der Nähe der Frontscheibe auf dem Instrumentenbrett befindet und dieses berühren kann.

2. Lichtschutzvorrichtung nach Anspruch 1, **dadurch gekennzeichnet, daß** zumindest auf einer Oberfläche der Bahn Informationen angeordnet sind.
